# DEMANDE DE BREVET EUROPEEN

(11) **EP 1 465 046 A1**
(43) Date de publication de la demande: **06.10.2004**
(21) Numéro de dépôt: 04300182.5
(22) Date de dépôt: 02.04.2004
(51) Int. Cl.: G06F 1/28

(54) **Dispositif de protection contre une inversion de polarité**

(30) Priorité: 03.04.2003 FR 0304144
(71) Demandeur: STMicroelectronics S.A., 92120 Montrouge (FR)
(72) Inventeur: Bienvenu, Philippe, 13190 Allauch (FR); Mattei, Sandra, 13005 Marseille (FR)
(74) Mandataire: de Beaumont, Michel

(57) **Abrégé**

L'invention concerne un dispositif (8) de protection d'un circuit (1) à protéger contre une inversion de polarité d'une connexion à une alimentation continue, comportant un interrupteur commandable intercalé sur ladite connexion entre une première borne (32) d'application d'une premier potentiel de ladite alimentation continue et une première borne (14) dudit circuit, et des premiers moyens pour ouvrir avec retard l'interrupteur en présence d'une polarité inversée.

## Description

La présente invention concerne la protection de circuits électroniques contre une inversion accidentelle de polarité d'une tension continue d'alimentation. L'invention s'applique plus particulièrement à la protection de circuits de commande de charges alimentées par une batterie continue, par exemple dans le domaine automobile.

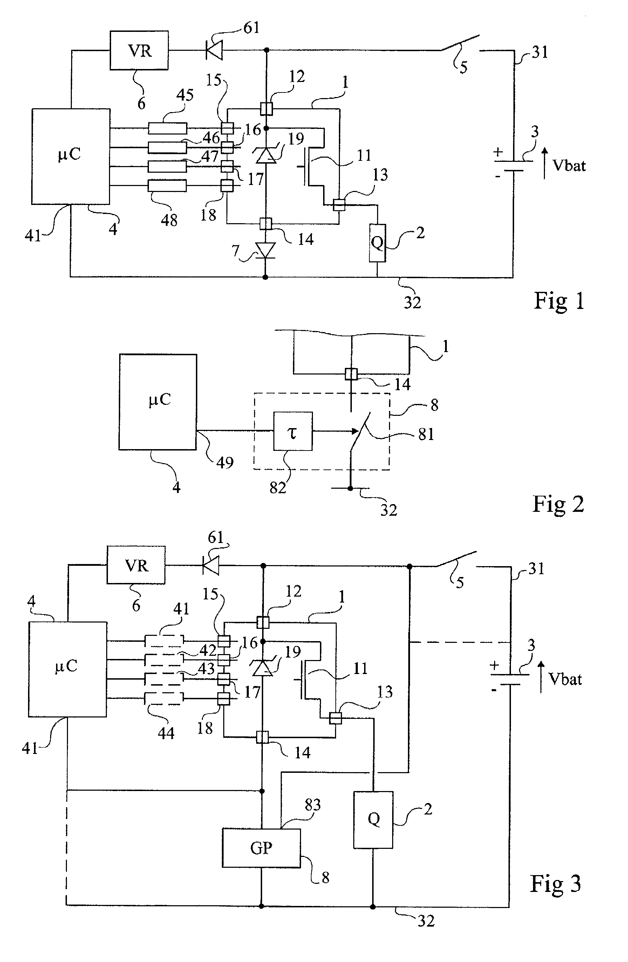

La figure 1 représente, de façon schématique, un exemple classique de circuit 1 de commande d'une charge 2 (Q) alimentée par une batterie 3.

Le circuit de commande 1 comprend essentiellement un commutateur 11 (généralement un transistor MOS) entre une borne 12 d'application de la tension continue Vbat et une borne 13 de raccordement de la charge 2, l'autre borne de la charge étant connectée (généralement directement) à la masse ou plus généralement à l'autre potentiel (borne 32) de l'alimentation continue que celui auquel est connectée la borne 12. Le circuit 1 est généralement un circuit intégré comportant en outre une borne 14 de connexion à la masse et des bornes d'entrée-sortie d'échange d'informations (commandes, états, etc.) avec un microcontrôleur 4 (µC). Dans l'exemple représenté, quatre bornes 15 à 18 du circuit 1, parmi lesquelles au moins une borne d'entrée d'un signal (logique) de commande en fermeture de l'interrupteur 11, sont prévues.

Un interrupteur 5 symbolise un interrupteur général du circuit électrique, par exemple, actionné par la clé de contact d'un véhicule. L'interrupteur 5 relie la borne positive 31 de la batterie 3 à la borne 12.

Le microcontrôleur 4 est généralement alimenté par un régulateur de tension 6 (VR) recevant, par l'intermédiaire de l'interrupteur 5 et d'une diode 61 dont l'anode est connectée à l'interrupteur d'alimentation, la tension de batterie et fournissant une tension régulée au microcontrôleur 4.

Plusieurs éléments de protection électrique équipent en outre le circuit 1 et ses connexions.

Un premier élément de protection est constitué d'une diode Zener 19, interne au circuit 1, reliant les bornes 12 et 14, l'anode de la diode 19 étant reliée à la borne 14. Cette diode 19 a pour objet de protéger la partie du circuit 1 comprenant les éléments de commande de l'interrupteur 11 en limitant la tension de la borne 12.

Un deuxième élément est constitué d'une diode 7 reliant la borne 14 à la borne 32, donc à la masse ou borne négative de la batterie 3, l'anode de la diode 7 étant reliée à la borne 14. Le rôle de la diode 7 est d'empêcher un court-circuit de la batterie en cas d'inversion de polarité. La diode 7 est passante en fonctionnement normal et assure la connexion de masse du circuit 1. Elle est bloquée en cas d'inversion de polarité de la batterie et empêche alors que la diode 19 (passante) relie les bornes 32 et 31, ce qui serait le cas si la borne 14 était directement reliée à la borne 32.

La diode 7 peut être remplacée par une résistance qui doit alors être de faible valeur pour éviter une chute de tension importante en fonctionnement normal. Une telle faible valeur engendre cependant une dissipation importante en cas d'inversion de polarité de la batterie.

On préfère donc classiquement la diode 7 qui peut être commune à plusieurs circuits 1, indépendamment de leur consommation, et qui engendre une chute de tension approximativement constante de l'ordre de 0,6 volt.

Le microcontrôleur 4 est généralement protégé contre une inversion de polarité par la diode 61.

La borne 41 de masse du microcontrôleur doit généralement être connectée directement à la borne 32. Ceci pour lui permettre de lire, sans décalage de tension, des informations provenant de capteurs (non représentés) directement reliés au "moins" 32 de la batterie.

Un inconvénient de la diode 7 est qu'elle ne permet pas d'assurer une protection du circuit 1 et du microcontrôleur 4 en cas d'impulsions transitoires négatives sur la borne de d'alimentation 12 (ou 31). Dans l'exemple d'application à l'automobile, ces impulsions transitoires correspondent à des pollutions transitoires normalisées (norme ISO T/R 7637/1) de la tension de batterie, d'énergie variable. Plus généralement, de telles impulsions transitoires peuvent être dues, par exemple, à des commutations de charges reliées à l'alimentation continue.

Lors d'impulsions transitoires positives sur la borne 12, la diode 7 reste passante. La diode Zener 19 joue alors son rôle de limitation de tension et protège les éléments de commande de l'interrupteur 11.

Par contre, lors d'impulsions transitoires négatives sur la borne 12, la diode 7 se bloque. La masse interne (borne 14) du circuit 1 devient alors fortement négative (par rapport au potentiel de la borne 32). Or, le microcontrôleur a sa masse référencée à la borne 32. Il en découle que les entrées-sorties 15 à 18 suivent le potentiel négatif de l'impulsion et tirent du courant sur le microcontrôleur. Pour pallier ce phénomène, chaque entrée-sortie 15 à 18 du circuit 1 est reliée au microcontrôleur par une résistance de protection 45 à 48. Ces résistances doivent être de forte valeur (au minimum de l'ordre du kiloohm) pour assurer ce rôle de protection.

Un inconvénient est lié à la présence des résistances 45 à 48 et leur encombrement. En particulier, les objectifs de miniaturisation conduisent à intégrer des interfaces séries dans les boîtiers contenant les circuits 1 afin de limiter les connexions au microcontrôleur. Ces connexions sont alors limitées préférentiellement au nombre de trois (une liaison d'horloge, une liaison de sortie à destination du microcontrôleur et une liaison d'entrée en provenance du microcontrôleur). S'agissant de liaisons séries, l'interprétation des informations s'effectue préférentiellement par mots numériques.

La présence des résistances de protection sur les lignes d'entrées-sorties pose un autre problème, particulièrement présent pour des communications série, que celui de la taille des résistances. En effet, ces résistances participent à des cellules RC (avec les capacités d'entrées ou de sorties qu'elles soient ou non parasites) qui introduisent un retard non négligeable dans la transmission d'informations entre le microcontrôleur et le ou les circuits de commande de charges.

En particulier, dans l'application au domaine automobile, les temps de réponse requis sont de moins d'une microseconde, ce qui est incompatible avec l'utilisation de résistances série de l'ordre du kiloohm ou plus.

La présente invention vise à proposer un dispositif de protection contre les inversions de polarité qui pallie les inconvénients des dispositifs connus. En particulier, l'invention vise à protéger des inversions transitoires tout en minimisant la valeur des résistances d'accès au microcontrôleur, voire en supprimant ces résistances.

L'invention vise également à proposer une solution qui soit compatible avec la miniaturisation des systèmes.

L'invention vise également à proposer une solution intégrable.

Pour atteindre ces objets et d'autres, la présente invention prévoit un dispositif de protection d'un circuit à protéger contre une inversion de polarité d'une connexion à une d'alimentation continue, comportant :
un interrupteur commandable intercalé sur ladite connexion entre une première borne d'application d'un premier potentiel de ladite alimentation continue et une première borne dudit circuit ; et
des premiers moyens pour ouvrir avec retard l'interrupteur en présence d'une polarité inversée.

Selon un mode de réalisation de la présence invention, ledit retard est choisi pour être supérieur à la durée maximale attendue d'inversions transitoires de polarité.

Selon un mode de réalisation de la présence invention, le dispositif de protection comporte des seconds moyens pour fermer l'interrupteur avec un retard inférieur au retard d'ouverture, lorsque la polarité est normale.

Selon un mode de réalisation de la présence invention, ladite première borne du circuit à protéger est une borne de connexion à la masse.

Selon un mode de réalisation de la présence invention, lesdits premiers moyens sont constitué d'un microcontrôleur dont une sortie commande, directement ou par l'intermédiaire d'un retardateur sélectif, ledit interrupteur.

Selon un mode de réalisation de la présence invention, ledit interrupteur est un transistor MOS, de préférence à canal N.

Selon un mode de réalisation de la présence invention, lesdits premiers moyens sont constitués d'une première résistance reliant la grille du transistor à ladite première borne du circuit à protéger.

Selon un mode de réalisation de la présence invention, une deuxième résistance en série avec une diode relie une borne du dispositif reliée à un deuxième potentiel de l'alimentation continue.

Selon un mode de réalisation de la présence invention, une diode Zener est connectée en parallèle avec la première résistance.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment est destinée à exposer l'état de la technique et le problème posé ;
la figure 2 représente, sous forme de blocs fonctionnels, un mode de réalisation d'un dispositif de protection selon la présente invention ;
la figure 3 représente un mode de réalisation de l'invention dans l'exemple d'application de la figure 1 ; et
la figure 4 représente un mode de réalisation de l'élément de protection de l'invention.

Les mêmes éléments on été désignés par les mêmes références aux différentes figures. Pour des raisons de clarté, seuls les éléments nécessaires à la compréhension de l'invention ont été représentés aux figures et seront décrits par la suite. En particulier, les charges commandées ainsi que les processus de commande par le microcontrôleur n'ont pas été détaillés et reprennent les solutions classiques. De plus, l'invention sera décrite plus particulièrement en relation avec un exemple d'application au domaine automobile, mais tout ce qui sera décrit s'applique, sauf précision contraire, à toute alimentation de charge(s) par une tension continue susceptible de subir des inversions de polarité transitoires ou durables et posant des problèmes analogues.

Une caractéristique de la présente invention est de prévoir, entre la borne de connexion de masse (ou plus généralement à un des potentiels d'alimentation continus) d'un circuit de commande d'une charge et la masse, un élément de protection particulier. Selon l'invention, cet élément a pour caractéristiques d'être passant en fonctionnement normal, d'être ouvert en cas d'inversion durable des polarités de l'alimentation continue, et de rester passant pendant des inversions transitoires (temporaires) de polarité.

La figure 2 représente un premier mode de réalisation d'un dispositif de protection de connexion à la masse selon la présente invention. La figure 2 reprend les éléments d'un montage classique du type de celui représenté en figure 1. Pour simplifier, la représentation de la figure 2 est partielle, seuls le dispositif de protection 8 de l'invention, le microcontrôleur 4 et une partie du circuit de commande 1 ont été représentés.

Selon ce mode de réalisation, le dispositif 8 est fonctionnellement constitué d'un interrupteur normalement fermé 81, reliant la borne 14 du circuit 1 à la masse 32 et d'un élément retardateur 82 (τ) retardant l'ouverture de l'interrupteur 81 suite à une détection d'inversion de polarité de la tension d'alimentation continue. La détection d'une inversion de polarité peut être effectuée par le microcontrôleur 4 si celui-ci dispose d'une alimentation insensible aux inversions de polarité. Une sortie 49 du microcontrôleur fournissant l'état (ou le sens) de la polarité est alors reliée à l'entrée de l'élément retardateur 82 dont la sortie commande, au moins à l'ouverture, l'interrupteur 81.

Le retard apporté par l'élément 82 est fonction des durées maximales attendues pour les perturbations transitoires. Le retard intervient à l'ouverture, ce qui permet de ne pas tenir compte d'une inversion temporaire si la polarité redevient normale avant l'expiration du délai fixé par le retardateur 82. De préférence, le retard n'intervient qu'à l'ouverture. Par exemple, le retardateur 82 laisse passer sans délai un état bas (0) indicateur d'une polarité normale pour fermer immédiatement l'interrupteur 81, et retarde la propagation d'un état haut (1) indicateur d'une inversion de polarité. Selon une variante de réalisation, le retard de l'élément 82 est calculé par le microcontrôleur qui commande alors directement l'interrupteur 81.

La figure 3 représente un deuxième mode de réalisation d'un dispositif de protection 8 (GP) de connexion de masse selon la présente invention. Le dispositif se connecte comme celui de la figure 2, à l'exception du fait qu'il détecte lui-même l'inversion de polarité et comprend pour cela une borne 83 de réception de la tension de batterie Vbat raccordée, de préférence, au même point que la borne d'alimentation positive 12 du circuit 1. En variante (représentée en pointillés), la borne 83 de réception de la tension d'alimentation est reliée en amont de l'interrupteur général 5, directement sur la borne positive d'alimentation. La figure 3 reprend donc les éléments de la figure 1, à l'exception de la diode 7 et des résistances 45 à 48. Le dispositif 8 comporte un interrupteur 81 (non représenté en figure 3) et un moyen équivalent à l'élément retardateur 82.

Le fonctionnement des dispositifs 8 des figures 2 et 3 sera décrit ci-après.

Une différence essentielle entre le dispositif de protection 8 de l'invention (quel que soit le mode de réalisation) et la diode 7 classique est que l'élément 8 se bloque avec retard à l'apparition d'une inversion de polarité. Ainsi, le fonctionnement du montage est le suivant.

En présence d'une tension d'alimentation Vbat normale (positive entre les bornes 12 et 32), l'interrupteur 81 est fermé, tout comme la diode 7 était précédemment polarisée en direct. La diode 19, interne au circuit 1, joue son rôle normal de protection du circuit de commande pour les impulsions transitoires.

Dans cette configuration, la chute de tension aux bornes de l'élément 8 passant est celle de l'interrupteur 81. Dans le cas le plus fréquent, il s'agira d'un transistor MOS. Un avantage de l'invention est alors qu'elle minimise la chute de tension entre les bornes 14 et 32. Comme l'illustre la figure 3, cela peut permettre de connecter la masse du microcontrôleur 4 en amont du dispositif 8 (donc sur la borne 14) et protéger ainsi en même temps le microcontrôleur 4. Bien entendu, il n'est pas exclu, en variante, de conserver la connexion de masse classique du microcontrôleur comme l'illustre, en pointillés, la figure 3.

En présence d'une tension négative transitoire, l'interrupteur 81 ne s'ouvre pas (contrairement à la diode 7 du montage classique) dans la mesure où le retardateur 82 (ou l'élément équivalent du dispositif 8 de la figure 3) est dimensionné pour apporter un retard supérieur au retard maximal attendu des transitoires que le système doit ignorer.

En fait, un courant I (défini à partir de la tension transitoire maximale, généralement normalisée) circule dans la diode 19 et dans l'interrupteur 81. En supposant une impédance Z à l'état passant de l'interrupteur 81, la chute de tension dans l'élément 8 est Z.I. La tension aux bornes du montage est alors limitée à Z.I + Vf, où Vf désigne la tension aux bornes de la diode 19 (en pratique, moins d'un volt).

Il en découle que la tension appliquée aux bornes du microcontrôleur 4 reliées aux bornes d'entrées-sorties 15 à 18 du circuit 1 ne peut excéder Z.I + Vf.

L'interrupteur 81 est dimensionné pour supporter le courant maximum des impulsions transitoires les plus énergétiques attendues.

Un avantage de l'invention est que les résistances 45 à 48 de protection des entrées-sorties du microcontrôleur peuvent être réduites dans un rapport d'au moins 100 (en pratique, des valeurs de l'ordre de l'ohm ou de la dizaine d'ohms suffisent), voire supprimées. En particulier, si la connexion de masse du microcontrôleur est reliée à la borne 14 du circuit, la tension appliquée sur les entrées-sorties du microcontrôleur est limitée à Vf (moins d'un volt). Dans l'exemple de la figure 3, des résistances 42 à 44 ont été illustrées en pointillés à la place des résistances 45 à 48.

Un avantage induit est qu'il est alors possible de prévoir des liaisons série entre le microcontrôleur et le ou les circuits 1 protégés par un dispositif de l'invention tout en garantissant une réponse rapide du système aux ordres du microcontrôleur.

En présence d'une inversion accidentelle (durable) de polarité de la tension d'alimentation, l'interrupteur 81 s'ouvre au bout du temps (τ) et évite alors le court-circuit de l'alimentation par la diode 19 interne au circuit 1.

On veillera à ce que la tension de claquage de l'interrupteur soit supérieure à la tension inverse maximale que peut voir le circuit (généralement 16 volts dans le cas d'une batterie automobile).

Un mode de réalisation simple du dispositif 8 est un transistor MOS commandé en tout ou rien (par exemple 0 ou 5 volts) par le microcontrôleur 4 qui se charge de toute la détection. Une commande encore plus simple consiste à relier la grille du transistor MOS directement à la sortie (par exemple, 5 volts) du régulateur 6. La temporisation à l'ouverture vient alors de la capacité du régulateur à maintenir sa tension de sortie en cas de disparition de sa tension d'entrée. Ce mode de réalisation pourra être utilisé, par exemple, pour les applications où il n'est pas indispensable de contrôler précisément le retard à l'ouverture.

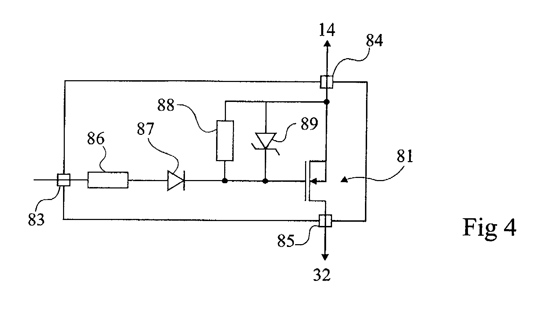

La figure 4 représente un mode de réalisation préféré du dispositif 8 de l'invention dans sa version de la figure 3 (dispositif autonome intégrant la constante de temps à l'ouverture).

Selon ce mode de réalisation, réalisé de préférence en circuit intégré, l'interrupteur 81 est un transistor MOS à canal N. Le drain du transistor 81 est directement relié à une borne 84 du dispositif 8 destinée à être reliée à la borne 14 de connexion de masse du circuit 1 à protéger. Sa source est directement reliée à une borne 85 du dispositif 8 destinée à être directement reliée à la masse 32 (ou à la borne la plus négative de l'alimentation). La grille du transistor 81 est reliée, par l'intermédiaire d'une première résistance 86 en série avec une diode 87, à la borne 83 d'entrée de détection. La cathode de la diode 87 est connectée directement à la grille du transistor 81 tandis que son anode est connectée, par la résistance 86, à la borne 83. La grille du transistor 81 est par ailleurs reliée à la borne 84, par une deuxième résistance 88, de préférence supérieure à la valeur de la résistance 86.

Quand une tension positive est présente sur la borne 83 (potentiel positif d'alimentation), la diode 87 conduit et le transistor 81 est passant.

En cas d'inversion de la polarité de la tension Vbat, la diode 87 se bloque immédiatement. Le transistor 81 reste cependant conducteur tant que la résistance 88 n'a pas déchargé sa capacité de grille. Si l'inversion de polarité est transitoire, la grille du transistor n'a pas le temps de se décharger. Lorsque la perturbation transitoire disparaît, la diode 87 redevient conductrice et le transistor 81 est de nouveau fermé. La fermeture du transistor 81 est conditionnée par la charge de sa capacité de grille par la résistance 86.

Si l'inversion de polarité se poursuit, le transistor 81 s'ouvre, ce qui empêche le court-circuit de l'alimentation.

La valeur de la résistance 88 est fixée en fonction de la capacité de grille du transistor 81 et de la durée maximale des inversions de polarité transitoires pour lesquelles on ne souhaite pas ouvrir le circuit (par exemple, pour avoir une constante de temps de l'ordre de la milliseconde).

De préférence, une diode Zener 89 relie la grille du transistor 81 à la borne 84, son anode étant connectée à la borne 84. Le rôle de cette diode est de limiter la tension grille-source du transistor 81 lorsqu'il est en conduction à la tension seuil de la diode 89 majorée de la tension drain-source du transistor 81.

Dans le cas de l'utilisation d'un transistor MOS à canal N comme interrupteur 81, on veillera à connecter le substrat (bulk) au drain afin d'éviter, par une connexion du substrat à la source, la présence d'une diode parasite qui serait polarisée en direct pendant les inversions de polarité.

La valeur de la résistance 86 est, de préférence, choisie la plus faible possible (par exemple, au moins dix fois inférieure à celle de la résistance 88). La résistance 86 peut même être omise si la tension sur la borne 83 ne risque pas de dépasser la tension d'avalanche de la diode 89 dont la résistance 86 limite le courant. Comme la résistance 86 est de valeur inférieure à celle de la résistance 88, la fermeture est plus rapide que l'ouverture. Cela permet notamment de respecter les vitesses requises pour la mise en route du circuit 1 (ou remise en route suite à une perturbation transitoire).

Un autre avantage de l'invention apparaît à la disparition de la tension d'alimentation (par exemple, à l'ouverture de l'interrupteur général 5). En effet, le retard à l'ouverture de l'interrupteur 81 par rapport à cette disparition d'alimentation permet d'évacuer un courant résiduel dans la charge 2. C'est le cas notamment si la charge 2 est, au moins partiellement inductive. L'interrupteur 81 fermé sert d'élément de roue libre (sous réserve que l'interrupteur 11 du circuit 1 reste également fermé) à l'ouverture de l'interrupteur général 5, contrairement à la diode 7 classique qui se bloque instantanément. On évite ainsi l'apparition de surtension au niveau de l'interrupteur 5 (par exemple la clé de contact d'un véhicule) susceptible de générer un arc à ses bornes.

Bien entendu, la présente invention est susceptible de diverses variantes et modifications qui apparaîtront à l'homme de l'art. En particulier, un dispositif de protection peut être prévu sur la connexion au potentiel le plus positif. Dans ce cas, on prévoit un transistor MOS à canal P côté alimentation positive.

De plus, le dimensionnement des différents constituants du dispositif de l'invention est à la portée de l'homme du métier à partir des indications fonctionnelles données ci-dessus.

Enfin, bien que l'invention ait été décrite en relation avec un seul circuit de commande et un seul dispositif de protection, un même dispositif de protection peut être partagé par plusieurs circuits de commande de charge différents.

## Revendications

1. Dispositif (8) de protection d'un circuit (1) à protéger contre une inversion de polarité d'une connexion à une d'alimentation continue, **caractérisé en ce qu'**il comporte :
un interrupteur commandable (81) intercalé sur ladite connexion entre une première borne (32) d'application d'une premier potentiel de ladite alimentation continue et une première borne (14) dudit circuit ;
des premiers moyens (4, 82, 88) pour ouvrir avec retard (τ) l'interrupteur en présence d'une polarité inversée ; et
des seconds moyens (4, 86) pour fermer l'interrupteur (81) avec un retard inférieur au retard d'ouverture, lorsque la polarité est normale.

2. Dispositif selon la revendication 1, dans lequel ledit retard (τ) est choisi pour être supérieur à la durée maximale attendue d'inversions transitoires de polarité.

3. Dispositif selon la revendication 1, dans lequel ladite première borne (14) du circuit à protéger (1) est une borne de connexion à la masse (32).

4. Dispositif selon l'une quelconque des revendications 1 à 3, dans lequel lesdits premiers moyens sont constitué d'un microcontrôleur (4) dont une sortie commande, directement ou par l'intermédiaire d'un retardateur sélectif (82), ledit interrupteur (81).

5. Dispositif selon l'une quelconque des revendications 1 à 3, dans lequel ledit interrupteur (81) est un transistor MOS, de préférence à canal N.

6. Dispositif selon la revendication 5, dans lequel lesdits premiers moyens sont constitués d'une première résistance (88) reliant la grille du transistor (81) à ladite première borne (14) du circuit à protéger.

7. Dispositif selon la revendication 6, dans lequel une deuxième résistance (86) en série avec une diode (87) relie une borne (83) du dispositif reliée à un deuxième potentiel de l'alimentation continue.

8. Dispositif selon la revendication 7, dans lequel une diode Zener (89) est connectée en parallèle avec la première résistance (88).
